# EUROPÄISCHE PATENTANMELDUNG

(11) **EP 1 069 139 A2**
(43) Veröffentlichungstag der Anmeldung: **17.01.2001**
(21) Anmeldenummer: 00113547.4
(22) Anmeldetag: 27.06.2000
(51) Int. Cl.: C08F 2/30

(54) **Wässrige Polymerdispersion, ihre Herstellung und Verwendung**

(30) Priorität: 13.07.1999 DE 19932572; 19.08.1999 DE 19939266
(71) Anmelder: Clariant GmbH, 65929 Frankfurt am Main (DE)
(72) Erfinder: Pöllmann, Klaus, Dr., 84489 Burghausen (DE); Ahrens, Hendrik, Dr., 49078 Osnabrück (DE); Stankowiak, Achim, Dr., 84503 Altötting (DE)

(57) **Zusammenfassung**

Die vorliegende Erfindung betrifft wäßrige Dispersionen, herstellbar durch Polymerisation einer olefinisch ungesättigten, wasserunlöslichen Verbindung in Gegenwart eines wasserlöslichen Allyl- oder Vinylethers der Formel 1 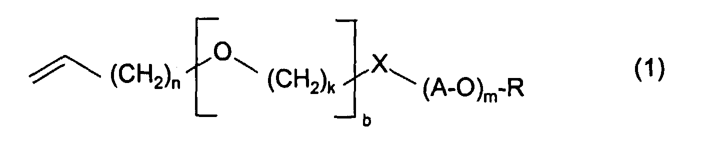 worin
- b: 0 oder 1
- n: 0 oder 1
- k: eine ganze Zahl von 1 bis 20,
- X: O oder N[(A-O)ₘ-R]
- A: C₂-C₄-Alkylen
- m: eine ganze Zahl von 5 bis 900, und
- R: H oder C₁-C₄-Alkyl
bedeuten,
und worin A nicht ausschließlich für C₃- oder C₄-Alkylen steht, indem die olefinisch ungesättigte wasserunlösliche Verbindung mit dem wasserlöslichen Allyl- und Vinylether in Wasser gemischt, und die Polymerisation durch einen Radikalstarter ausgelöst wird.

## Beschreibung

Die vorliegende Erfindung betrifft Polymerdispersionen, die unter Verwendung von polymerisierbaren Polyalkylenglykol-Makromonomeren herstellbar sind.

Als polymere Emulgatoren und Schutzkolloide für die verschiedensten Anwendungen werden im allgemeinen ambivalente Copolymere, die sowohl hydrophobe als auch hydrophile Comonomeranteile enthalten, verwendet. Typische Beispiele sind das bei der Suspensionspolymerisation von z. B. Styrol verwendete teilverseifte Polyvinylacetat, beispielsweise in W.P.J. Bailey in Chemistry and Technology of water-soluble Polymers, Plenum Press, 1983 Seite 261 ff, ISBN 0306-41251-9 offenbart, das über die nichtverseiften Anteile von Vinylacetat auf den emulgierten Styroltröpfchen adsorbiert und über die hydrophilen Anteile an Polyvinylalkohol eine Emulgierung dieser Tröpfchen in der wäßrigen Suspension gewährleistet. Ähnlich wirken Copolymere aus Acrylsäure und hydrophoben Acryl- und Methacrylsäureestern wie z. B. Dodecylmethacrylat mit denen im Kosmetikbereich wäßrige Lotionen und Emulsionen von wasserunlöslichen Ölen formuliert und stabilisiert werden (Lit: Produktinformation BF Goodrich 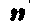 Pemulen Emulsifiers" 1995) oder Acrylcopolymere, die zur Stabilisierung wäßrigen Dispersionen von Silikaten, Gips, Talk, Ton und anderen Mineralien in der Erdölexploration und Baustofformulierung eingesetzt werden (EP-A-0 870784).

JP-A-5-209 052 offenbart Copolymere aus Vinylchlorid mit Vinylpolyether-Makromonomeren, die in Form fester Produkte anfallen. Eine Dispergierwirkung der Vinylpolyether-Makromonomere wird nicht offenbart.

EP-A-0 736 553 offenbart Copolymere aus Carbonsäuren oder deren Derivaten und propoxylierten Vinylethern, die aber ebenfalls nicht als Dispersion anfallen.

Aufgabe der vorliegenden Erfindung war es, ein Verfahren aufzufinden, mit dem Copolymere unmittelbar als wäßrige Dispersion erhalten werden.

Die vorliegende Erfindung beschreibt eine Klasse von wasserdispergierten Copolymeren, die durch Copolymerisation von Allyl- oder Vinylpolyethern mit bekannten, meist hydrophoben Monomeren herstellbar sind. Die Copolymere können in Substanz zur Emulgierung/Dispergierung eingesetzt, oder je nach Verfahren und Verwendungszweck, wie z.B. bei der Emulsionspolymerisation, durch Zusatz kleiner Mengen der polymerisierbaren Makromonomeren in situ hergestellt werden.

Gegenstand der Erfindung sind somit wäßrige Dispersionen, herstellbar durch Polymerisation einer olefinisch ungesättigten, wasserunlöslichen Verbindung in Gegenwart eines wasserlöslichen Allyl- oder Vinylethers der Formel 1 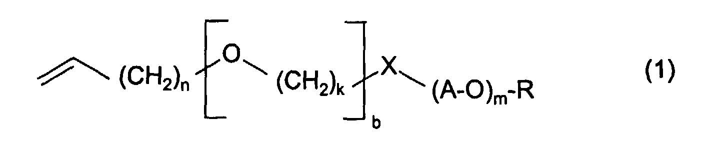 worin
- b: 0 oder 1
- n: 0 oder 1
- k: eine ganze Zahl von 1 bis 20,
- X: O oder N[(A-O)ₘ-R]
- A: C₂-C₄-Alkylen
- m: eine ganze Zahl von 5 bis 900, und
- R: H oder C₁-C₄-Alkyl
bedeuten,
und worin A nicht ausschließlich für C₃- oder C₄-Alkylen steht, indem die olefinisch ungesättigte wasserunlösliche Verbindung mit dem wasserlöslichen Allyl- oder Vinylether in Wasser gemischt, und die Polymerisation durch einen Radikalstarter ausgelöst wird.

k nimmt vorzugsweise Werte von 2 bis 12, insbesondere 4 bis 8 an. X bedeutet vorzugsweise Sauerstoff. R bedeutet vorzugsweise Wasserstoff. In einer weiteren bevorzugten Ausführungsform ist n=1, b=0 und X=O.

In der durch (A-O)ₘ wiedergegebenen Alkoxykette bedeutet A vorzugsweise einen Ethylen- oder Propylenrest, insbesondere einen Ethylenrest. Die Gesamtzahl von Alkoxyeinheiten liegt vorzugsweise zwischen 8 und 240, insbesondere zwischen 16 und 115. Bei der Alkoxykette kann es sich um eine Blockpolymerkette handeln, die alternierende Blöcke verschiedener Alkoxyeinheiten, vorzugsweise Ethoxy- und Propoxyeinheiten, aufweist. Es kann sich dabei auch um eine Kette mit statistischer Abfolge der Alkoxyeinheiten handeln.

In einer bevorzugten Ausführungsform steht -(A-O)ₘ- für eine Alkoxykette der Formel

―(CH₂―CH(CH₃)―O)ₐ―(CH₂―CH₂―O)_{b}―(CH₂―CH(CH₃)―O)_{c}―

worin
- a: eine Zahl von 0 bis 300, vorzugsweise 1 bis 80, insbesondere 2 bis 35
- b: eine Zahl von 5 bis 300, vorzugsweise 8 bis 80, insbesondere 10 bis 45
- c: eine Zahl von 0 bis 300, vorzugsweise 1 bis 80, insbesondere 8 bis 35
bedeuten.

In einer weiteren bevorzugten Ausführungsform steht -(A-O)ₘ- für einen Ethoxyrest mit 8 bis 240 Ethoxyeinheiten.

Allen Ausführungsformen gemein ist, daß vorzugsweise mindestens 50 mol-% der Reste (A-O) Ethoxyreste sind, insbesondere sind 60 bis 90 mol-% Ethoxyreste. Die Zahl der Propoxy- und Butoxyreste ist in einer bevorzugten Ausführungsform höchstens so groß, daß der Trübungspunkt der Verbindung der Formel 1 in Wasser noch bei 30°C oder darüber liegt.

Steht X für N[(A-O)ₘ-R], so weisen die Verbindungen der Formel 1 folgende Struktur auf:

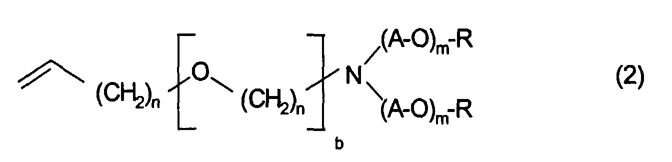

Die Verbindungen der Formel 2, worin k, A, m, n, b und R die bereits oben angegebenen Bedeutungen haben, bilden einen weiteren Gegenstand der Erfindung.

Ein weiterer Gegenstand der Erfindung sind Verbindungen der Formel 1, worin X = O und R = C₁-C₄-Alkyl ist. Vorzugsweise ist in solchen Verbindungen n = 0.

Die Verbindungen der Formel 1 werden im folgenden auch als polymerisierbare Makromonomere bezeichnet.

Im folgenden wird die Herstellung der polymerisierbaren Makromonomeren sowie exemplarische Anwendungen der erfindungsgemäßen Dispersionen näher beschrieben und an Beispielen erläutert.

Die polymerisierbaren Makromonomere werden durch anionisch/alkalisch initiierte Polymerisation von hydroxy- oder aminofunktionellen Allyl- oder Vinylethern (Ether, die noch mindestens ein aktives Wasserstoffatom haben) mit Alkylenoxid oder Gemischen von Alkylenoxiden in statistischer Verteilung oder als Blockcopolymere hergestellt. Darüber hinaus können die so hergestellten Makromonomere noch mittels Williamson-Synthese an den endständigen Hydroxygruppen verethert werden. Die Hydroxy- oder aminofunktionellen Allyl- oder Vinylether weisen die Formel 3 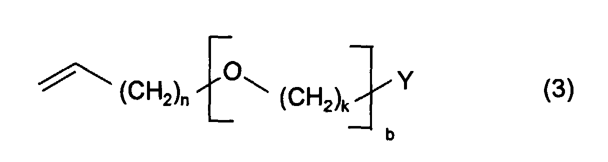 mit Y = OH, NH₂ auf.

Der Grad der Wasserlöslichkeit, definiert durch den Trübungspunkt, der polymerisierbaren Makromonomere, sowie der Grad ihrer hydrophilierenden und dispergierenden Wirkung kann durch das Verhältnis und Anzahl der Alkylenoxideinheiten, vorzugsweise von Ethylenoxid zu Propylenoxid, sowie die Auswahl des hydroxy- oder aminofunktionellen Allyl- oder Vinylethers eingestellt werden.

Durch die radikalisch initiierte Copolymerisation der polymerisierbaren Makromonomere mit olefinisch ungesättigten wasserunlöslichen Monomeren entstehen die erfindungsgemäßen Copolymer-Dispersionen. Geeignete wasserunlösliche Monomere, die mit den Makromonomeren polymerisiert werden können, sind beispielsweise folgende:
- Vinylmonomere wie Carbonsäureester des Vinylalkohols, beispielsweise Vinylacetat, Vinylpropionat, Vinylether der Isononansäure oder der Isodecansäure, Styrol und Stilben,
- olefinisch ungesättigte Carbonsäureester, wie Ethylacrylat, n-Butylacrylat, i-Butylacrylat, Hexylacrylat, 2-Ethylhexylacrylat, Hydroxyethylacrylat sowie die entsprechenden Methacrylsäureester,
- olefinisch ungesättigte Carbonsäuren, wie Acrylsäure, Methacrylsäure und Itaconsäure und ihre Natrium-, Kalium- und Ammoniumsalze,
- olefinisch ungesättigte Sulfonsäuren und Phosphonsäuren und ihre Alkali- und Ammoniumsalze, wie Acrylamidomethylpropansulfonsäure (AMPS) und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methacrylamid, N-Ethylacrylamid, N-Propylacrylamid sowie die entsprechenden Methacrylsäurederivate und Vinylmethylacetamid,
- Olefine, wie Ethylen, Propen und Butene, Penten, 1,3-Butadien und Chloropren,
- Vinylhalogenide, wie Vinylchlorid, Vinylidenchlorid und Vinylidenfluorid.

Die vorliegende Erfindung bezieht sich ferner auf die Verwendung der oben definierten Makromonomere der Formel 1 in Emulsionspolymerisationen oder Suspensionspolymerisationen.

Ein weiterer Gegenstand der Erfindung ist die Verwendung der erfindungsgemäßen polymerisierbaren Polyalkylen-Makromonomeren als Emulgatoren oder Dispergatoren.

Die Verbindungen der Formel 1 können allein in Suspensions- oder Emulsionspolymerisationen als Emulgator verwendet werden, sowie in Mischung mit anionischen und/oder nichtionischen Tensiden, die im Stand der Technik bekannt sind.

Übliche anionische Tenside sind Natriumalkylsulfat, Natriumdodecylbenzolsulfonat, Natriumalkylsulfonat, Natrium- und Ammoniumalkylpolyethylenglykolethersulfate, Natrium- und Ammoniumalkylphenolpolyethylenglykolethersulfate sowie Alkylpolyethylenglykoletherphosphorsäuremono-, di- und triester und deren Mischungen und Alkylphenolpolyethylenglykoletherphosphorsäuremono-, di- und triester und deren Mischungen.

Folgende Beispiele verdeutlichen die Erfindung näher.

### Beispiel 1

50,5 g 4-Hydroxybutylvinylether wurden mit 0,2 mol NaOCH₃ -Lösung auf einen pH von 14 eingestellt und mit 440 g Ethylenoxid unter Druck bei 140°C für 8h umgesetzt. Das resultierende Produkt (Makromonomer) war vollständig wasserlöslich, d. h. der Trübungspunkt des Makromonomers in Wasser liegt bei über 100°C. Die OH-Zahl liegt bei 62,8 mg/KOH/g, entsprechend einem Molekulargewicht von 894 g/mol. Dies entspricht einem Polyethylenoxidmonobutylvinylether mit 18 Einheiten Ethylenoxid pro Vinylethereinheit. Mittels ¹H- NMR und durch Bestimmung der Jodzahl (21 g/100g) konnte der vollständige Erhalt der Vinyleinheiten (polymerisierbare Einheiten) pro Molekül nachgewiesen werden.

### Beispiel 2

50,5 g 4-Hydroxybutylvinylether wurden mit 0,2 mol Na OCH₃ -Lösung auf einen pH von 14 eingestellt und mit zunächst mit 145 g Propylenoxid unter Druck bei 140°C für 6h umgesetzt. Zum Reaktionsprodukt wurden 440 g Ethylenoxid zugegeben und ebenfalls unter Druck bei 140°C für 8 h reagiert. Das resultierende Produkt (Makromonomer) war bei Raumtemperatur noch vollständig wasserlöslich, zeigte einen Trübungspunkt in Wasser von 64,4°C und hatte tensidische, emulgierende Eigenschaften. Die OH-Zahl war 50,9 mg/KOH/g entsprechend einem Molekulargewicht von 1100 g/mol. Dies entspricht einem Polyethylenoxidpolypropylenoxid-blockcopolymer-monobutylvinylether mit 18 Einheiten Ethylenoxid und 4 Einheiten Propylenoxid pro Vinylethereinheit. Mittels ¹H- NMR und durch Bestimmung der Jodzahl (21 g/100g) konnte der vollständige Erhalt der Vinyleinheiten (polymerisierbare Einheiten) pro Molekül nachgewiesen werden.

### Beispiel 3

50,5 g Diethylenglykolmonovinylether wurden mit 0,2 mol NaOCH₃-Lösung auf einen pH Wert von 14 eingestellt und mit 440 g Ethylenoxid unter Druck bei 140°C für 8h umgesetzt. Das resultierende Produkt (Makromonomer) war vollständig wasserlöslich, d.h. der Trübungspunkt des Makromonomers in Wasser liegt bei über 100°C.

### Beispiel 4

50,5 g Aminopropylvinylether wurden mit 0,1 mol NaOCH₃ -Lösung auf einen pH Wert von 14 eingestellt und mit 440 g Ethylenoxid unter Druck bei 140°C für 8h umgesetzt. Das resultierende Produkt (Makromonomer) war vollständig wasserlöslich, d.h. der Trübungspunkt des Makromonomers in Wasser liegt bei über 100°C.

### Beispiel 5

49,5 g Diethylenglykolmonovinylether wurden mit 0,1 mol NaOCH₃-Lösung auf einen pH-Wert von 14 eingestellt und mit 800 g Ethylenoxid unter Druck bei 140°C für 10 h umgesetzt. Das resultierende Produkt (Makromonomer) war vollständig wasserlöslich, d.h. der Trübungspunkt war über 100°C, Die OH-Zahl war 28 mg/KOH/g entsprechend einem Molekulargewicht von 2000 g/mol. Mittels ¹H-NMR und durch Bestimmung der Jodzahl (10 g/100g) konnte der vollständige Erhalt der Vinyleinheiten (polymerisierbare Einheiten) pro Molekül nachgewiesen werden.

### Beispiel 6

Das Makromonomer aus Beispiel 1 wird mit AMPS copolymerisiert.

### Beispiel 7

Das Makromonomer aus Beispiel 2 wird als Coemulgator bei der Emulsionspolymerisation von Vinylacetat und iso-Decansäurevinylester verwendet. Das sich in situ bildende Copolymer aus Vinylacetat und iso-Decansäurevinylester und dem Makromonomer aus Beispiel 2 hat auf Basis seiner ambivalenten Struktur gute emulsionsstabilisierende Eigenschaften.

360 ml Wasser werden in einem Glaskolben vorgelegt und 6 g ®Emulsogen EPA 073 (Alkylethersulfat), 24 g ®Tylose H 200 YG4 (Hydroxylethylcellulose), 6 g Borax, 2,6 g Essigsäure (99%ig) und 92 g einer 1,17%igen Kaliumperoxodisulfat-Lösung und 170 g einer Monomeremulsion zugegeben, die aus 480 g Wasser, 6 g Emulsogen EPA 073, 17 g Emulsogen EPN 287 (Alkylethoxylat), 30 g des Makromonomers aus Beispiel 2, 300 g iso-Decansäurevinylester und 900 g Vinylacetat besteht. Anschließend wird auf 76°C hochgeheizt und nach Beginn der Reaktion bei 80°C über 3 Stunden die übrige Monomeremulsion und weitere 210 g einer 1,17%igen Kaliumperoxodisulfat-Lösung zudosiert. Im Anschluß wird 2 Stunden zur Nachpolymerisation bei 80°C gerührt und auf Raumtemperatur abgekühlt. Während der Abkühlphase werden 3 g Konservierungsmittel (®Mergal K9N) zugegeben.

### Beispiel 8

Das Makromonomer aus Beispiel 2 wird als Coemulgator bei der Emulsionspolymerisation von n-Butylacrylat, Methylmethacrylat und Methacrylsäure verwendet. Das sich in situ bildende Copolymer aus n-Butylacrylat, Methylmethacrylat und Methacrylsäure und dem Makromonomer aus Beispiel 2 hat auf Basis seiner ambivalenten Struktur gute emulsionsstabilisierende Eigenschaften.

520 ml Wasser werden in einem Glaskolben vorgelegt und 16 g ®Emulsogen EPA 1954 (Natriumalkylsulfat), 15 g einer 3,75%igen Ammoniumperoxodisulfat-Lösung, 11,8 g n-Butylacrylat, 11,8 g Methylmethacrylat und 0,48 g Methacrylsäure zugegeben und gerührt. Unter Rühren wird die Emulsion auf 80°C geheizt und über 4 Stunden eine Monomeremulsion zudosiert, die aus 475 ml Wasser, 16 g Emulsogen EPA 1954, 4,8 g des Makromonomers aus Beispiel 2, 440 g n-Butylacrylat, 440 g Methylmethacrylat, 8,8 g Methacrylsäure und 2,85 g Ammoniumperoxodisulfat besteht. Nach vollständiger Dosierung der Monomeremulsion und einer Nachpolymerisation von einer Stunde bei 80°C wird die Polymerdispersion auf Raumtemperatur abgekühlt und mit Ammoniak-Lösung auf pH 8-9 eingestellt.

### Beispiel 9

Das Makromonomer bestehend aus einem Blockpolymer aus Allylalkohol, der zunächst mit 5 Mol Propylenoxid und anschließend mit 30 Mol Ethylenoxid umgesetzt wurde, wird als Coemulgator bei der Emulsionspolymerisation von n-Butylacrylat, Methylmethacrylat und Methacrylsäure verwendet. Das sich in situ bildende Copolymer aus n-Butylacrylat, Methylmethacrylat und Methacrylsäure und dem beschriebenen Allylalkoxylat hat auf Basis seiner ambivalenten Struktur gute emulsionsstabilisierende Eigenschaften.

520 ml Wasser werden in einem Glaskolben vorgelegt und 16 g ®Emulsogen EPA 1954 (Natriumalkylsulfat), 15 g einer 3,75%igen Ammoniumperoxodisulfat-Lösung, 11,8 g n-Butylacrylat, 11,8 g Methylmethacrylat und 0,48 g Methacrylsäure zugegeben und gerührt. Unter Rühren wird die Emulsion auf 80°C geheizt und über 4 Stunden eine Monomeremulsion zudosiert, die aus 460 ml Wasser, 32 g Emulsogen EPA 1954, 4,8 g des beschriebenen Allylalkoxylates, 440 g n-Butylacrylat, 440 g Methylmethacrylat, 8,8 g Methacrylsäure und 2,85 g Ammonlumperoxodisulfat besteht. Nach vollständiger Dosierung der Monomeremulsion und einer Nachpolymerisation von einer Stunde bei 80°C wird die Polymerdispersion auf Raumtemperatur abgekühlt und mit Ammoniak-Lösung auf pH 8-9 eingestellt.

### Beispiel 10

Zu 100 g des Produkts aus Beispiel 1 werden unter Stickstoff zunächst 10 g feste NaOH zugegeben und anschließend 14 g n-Butylchlorid zudosiert. Das Reaktionsgefäß wird unter Druck für 5 Stunden bei 80°C gerührt. Anschließend wird evakuiert und im Vakuum auf 120°C erhitzt und erneut 3 Stunden gerührt.
Nach Abkühlen wird zum Reaktionsgemisch mehrmals mit 500 ml Wasser gerührt und zur Phasentrennung stehen gelassen. Die wässrige Kochsalz enthaltende Phase wird jeweils verworfen. Die obere Phase (Ausbeute: 94 g/88 % ) stellt gemäß 1H-NMR, Jodzahlbestimmung (24 g/100g) und OH-Zahlmessung (5 mg/g) schließlich den Mono-n-butyl-polyethylenglykol-mono-4-hydroxyvinylether mit 18 Einheiten Ethylenoxid dar.

### Beispiel 11

Zu 100 g des Produkts aus Beispiel 1 werden unter Stickstoff im Autoklaven zunächst 10 g feste NaOH zugegeben und anschließend unter Druck 7 g Methylchlorid zudosiert. Das Reaktionsgefäß wird unter Druck für 5 Stunden bei 80°C gerührt. Anschließend wird evakuiert und im Vakuum auf 120°C erhitzt und erneut 3 Stunden gerührt.
Nach Abkühlen wird zum Reaktionsgemisch mehrmals mit 500 ml Wasser gerührt und zur Phasentrennung stehen gelassen. Die wässrige Kochsalz enthaltende Phase wird jeweils verworfen. Die obere Phase (Ausbeute: 92 g / 90 % ) stellt gemäß 1H-NMR, Jodzahlbestimmung (26 g/100 g) und OH-Zahlmessung (5 mg/g) schließlich den Mono-methyl-polyethylenglykol-mono-4-hydroxyvinylether mit 18 Einheiten Ethylenoxid dar.

## Patentansprüche

1. Wäßrige Dispersionen, herstellbar durch Polymerisation einer olefinisch ungesättigten, wasserunlöslichen Verbindung in Gegenwart eines wasserlöslichen Allyl- oder Vinylethers der Formel 1 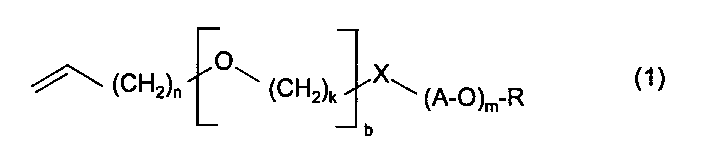 worin
b 0 oder 1
n 0 oder 1
k eine ganze Zahl von 1 bis 20,
X O oder N[(A-O)ₘ-R]
A C₂-C₄-Alkylen
m eine ganze Zahl von 5 bis 900, und
R H oder C₁-C₄-Alkyl
bedeuten,
und worin A nicht ausschließlich für C₃- oder C₄-Alkylen steht, indem die olefinisch ungesättigte wasserunlösliche Verbindung mit dem wasserlöslichen Allyl- oder Vinylether in Wasser gemischt, und die Polymerisation durch einen Radikalstarter ausgelöst wird.

2. Wäßrige Dispersionen gemäß Anspruch 1, worin k eine Zahl von 4 bis 8 bedeutet.

3. Wäßrige Dispersionen gemäß Anspruch 1 und/oder 2, worin X für Sauerstoff steht.

4. Wäßrige Dispersionen gemäß einem oder mehreren der Ansprüche 1 bis 3, worin R für Wasserstoff steht.

5. Wäßrige Dispersionen gemäß einem oder mehreren der Ansprüche 1 bis 4, worin A für Ethylen oder Propylen steht.

6. Wäßrige Dispersionen gemäß einem oder mehreren der Ansprüche 1 bis 5, worin -(A-O)ₘ- für ein Alkylenoxidblockpolymer der Formel
―(CH₂―CH(CH₃)―O)ₐ―(CH₂―CH₂―O)_{b}―(CH₂―CH(CH₃)―O)_{c}―
worin
a eine Zahl von 0 bis 300, vorzugsweise 1 bis 80, insbesondere 2 bis 35
b eine Zahl von 5 bis 300, vorzugsweise 8 bis 80, insbesondere 10 bis 45
c eine Zahl von 0 bis 300, vorzugsweise 1 bis 80, insbesondere 8 bis 35
bedeuten.

7. Wäßrige Dispersionen gemäß einem oder mehreren der Ansprüche 1 bis 4, worin -(A-O)ₘ- für eine Ethoxykette mit 8 bis 240 Ethoxyeinheiten steht.

8. Verfahren zur Herstellung von Verbindungen gemäß Formel 1 durch anionisch/alkalisch initiierte Polymerisation von hydroxy- oder aminofunktionellen Allyl- oder Vinylethern der Formel 3 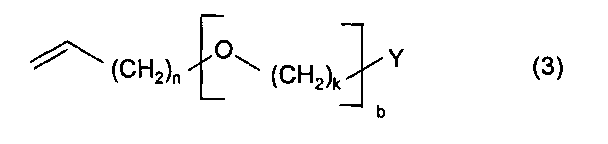 worin Y für OH oder NH₂ steht, mit C₁-C₄-Alkylenoxid oder Gemischen aus solchen Alkylenoxiden, und ggf. nachfolgender Williamson-Veretherung der endständigen OH-Gruppe mit einem C₁-C₄-Alkylrest.

9. Verbindungen der Formel 2 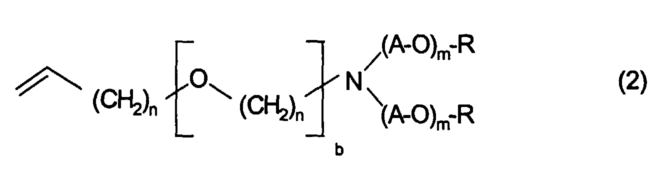 worin
n 0 oder 1
b 0 oder 1
k eine ganze Zahl von 1 bis 20
A C₂-C₄-Alkylen
m eine ganze Zahl von 5 bis 900, und
R H oder C₁-C₄-Alkyl bedeuten.

10. Verbindungen der Formel (1) 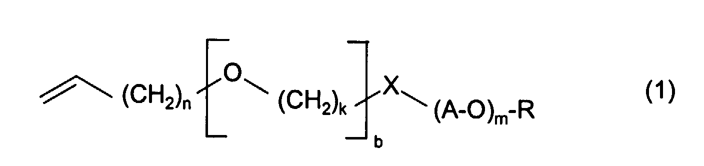 worin
b 0 oder 1
n 0 oder 1
k eine ganze Zahl von 1 bis 20,
X O
A C₂-C₄-Alkylen
m eine ganze Zahl von 5 bis 900, und
R C₁-C₄-Alkyl
bedeuten.

11. Verwendung von Verbindungen gemäß Formel 1 zur Herstellung von Copolymeren mit weiteren olefinisch ungesättigten Verbindungen.

12. Verwendung von Verbindungen gemäß Formel 1 als Additiv zur Emulsionsstabilisierung in Emulsions- oder Suspensionspolymerisationen.

13. Verwendung von Verbindungen gemäß einem oder mehreren der Ansprüche 1 bis 7 als Dispergiermittel.
